# EUROPEAN PATENT SPECIFICATION

(11) **EP 1 265 950 B1**
(45) Date of publication and mention of the grant of the patent: **27.07.2005**
(21) Application number: 00985632.9
(22) Date of filing: 20.12.2000
(51) Int. Cl.: C08J 5/22, H01M 10/40

(54) **MICROPOROUS MEMBRANE**
MIKROPORÖSE MEMBRAN
MEMBRANE MICROPOREUSE

(30) Priority: 23.12.1999 GB 9930291; 31.05.2000 GB 0013130
(43) Date of publication of application: 18.12.2002
(73) Proprietor: AEA Technology Battery Systems Limited, Oxon OX11 0QJ (GB)
(72) Inventor: COOWAR, Fazlil, Sugarland, Texas 77479 (US); KRONFLI, Esam, Swindon, Wiltshire SN3 4AZ (GB)
(74) Representative: Mansfield, Peter Turquand
(86) International application number: PCT/GB2000/004889
(87) International publication number: WO 2001/048063

(56) References cited:
- EP-A- 0 578 210
- EP-A- 0 730 316
- EP-A- 0 804 961
- GB-A- 2 309 701
- GB-A- 2 309 703
- US-A- 4 238 571
- US-A- 4 384 047
- US-A- 5 296 318
- US-A- 5 962 168

## Description

This invention relates to a way of making a microporous membrane, in particular of a polymer such as polyvinylidene fluoride, and to the use of such a membrane in a lithium cell.

For many years it has been known to make cells with lithium metal anodes, and cathodes of a material into which lithium ions can be intercalated or inserted. Such cells may use, as electrolyte, a solution of a lithium salt in an organic liquid such as propylene carbonate, and a separator such as filter paper or polypropylene. The use of a solid-state ion-conducting polymer such as a complex of a lithium salt with poly-(ethylene oxide) has also been suggested as an electrolyte. In the case of secondary or rechargeable lithium cells, the use of lithium metal anodes is unsatisfactory as problems arise from dendrite growth, but the use of an intercalation material such as graphite has enabled satisfactory cells to be made. Such cells may be referred to as "lithium ion" cells, or "swing" cells, as lithium ions are exchanged between the two intercalation materials during charge and discharge.

An alternative type of polymer electrolyte has been proposed by Gozdz et al. (U.S. 5 296 318), which comprises a copolymer of 75 to 92% vinylidene fluoride and 8 to 25% hexafluoropropylene, blended with a lithium salt and a compatible solvent such as ethylene carbonate/propylene carbonate mixture and cast from solution in a low boiling-point solvent such as tetrahydrofuran. GB 2 309 703 B (AEA Technology) describes a similar electrolyte composition in which the polymer is polyvinylidene fluoride (PVdF) homopolymer, the PVdF being characterized by a very low melt flow index. GB 2 309 701 B (AEA Technology) describes how the adhesion of a polymeric electrolyte composition can be enhanced by grafting suitable mono-unsaturated groups onto the polymer chain, and in this case the polymeric chain might be a homopolymer PVdF, or a copolymer or terpolymer consisting primarily of vinylidene fluoride. It is also possible to make such a solid polymer electrolyte by first making a porous film of the polymer material, and then immersing the film in a solution of lithium salt in an organic solvent so the electrolyte solution combines with the polymer film, as described in EP 0 730 316 A (Elf Atochem). However, with known methods for making porous films, it is difficult to achieve micropores of substantially uniform size, and any macropores are detrimental to the mechanical strength of the resulting film.

According to the present invention there is provided a method of making a porous polymer membrane in which a polymer consisting primarily of vinylidene fluoride is dissolved in a suitable liquid, the solution is cast to form a thin layer less than 0.5 mm thick on a substrate, and the liquid phase is then slowly evaporated while being exposed to a dry gas and without contacting the layer with any other liquids, so that a substantially uniform microporous membrane of polymer is formed.

The liquid may comprise a solvent for the polymer, combined with a small proportion of a non-solvent which dissolves in the solvent. Alternatively the liquid may be a latent solvent, that is to say a solvent in which the polymer will only dissolve at an elevated temperature, and when cooled the polymer precipitates. The evaporation process may be performed at a temperature above ambient temperature. The dry gas may be dehumidified air; it should have a dew point less than -10°C, more preferably less than -20°C for example about -40°C. For example the film of solution may be less than 0.3 mm thick, and it may be dried over a period of at least ten minutes, and a temperature of say 50°C.

The invention also provides a porous polymer membrane made by this method. Such a membrane may be used to form a solid electrolyte for a lithium cell, by soaking the membrane in a non-aqueous liquid electrolyte, the membrane combining with the electrolyte solution to form a solid electrolyte (which may be referred to as a gelled electrolyte).

The polymer may be a homopolymer, i.e. polyvinylidene fluoride (PVdF), or a copolymer for example with hexafluoropropylene, or a terpolymer, in each case the proportion by weight of vinylidene fluoride being at least 85%. In one aspect, the method of the present invention has similarities to the procedure described by Benzinger et al. (U.S. 4 384 047) in which a polyvinylidene fluoride ultrafiltration membrane is prepared by casting a sheet of the polymer dissolved in a mixture of a solvent and a non-solvent, and then evaporating some of the solvent; but the present procedure differs in that all the liquid components are removed by evaporation, whereas in Benzinger's process the sheet must be immersed in a gelation liquid such as cold water. The method of the present invention can produce a more uniform range of pore sizes, which are preferably between 0.1 and 10 µm, more preferably between 0.5 and 2 µm, and has the advantage that the entire process can be carried out in the absence of water or humidity, so reducing the risk of water being present in the final film or membrane (which would be detrimental to the properties of a lithium cell).

Some liquids suitable as solvents, and as latent solvents, for such vinylidene fluoride-based polymers are listed in the Table. It should however be appreciated that not all solvents are suitable for all grades of polymer.

**Table**

| Solvent | Boiling Point /°C | Latent Solvent | Dissolution Temperature /°C | Boiling Point /°C |
|---|---|---|---|---|
| tetrahydrofuran | 66 | cyclohexanone | 70 | 157 |
| methyl-ethylketone | 80 | 4-hydroxy-4-methyl-pentanone | 100 | 160 |
| dimethyl formamide | 153 | 5-methyl-2-hexanone | 102 | 144 |
| dimethyl acetamide | 166 | 1-methoxy-2-propanol | 115 | 120 |
| dimethyl sulphoxide | 189 | propylene carbonate | 80 | 240 |
| N-methyl pyrrolidone | 203 | dimethyl phthalate | 110 | 280 |

The non-solvent should not only dissolve in the solvent, but it should be miscible with the solvent in substantially all proportions. The boiling point of the non-solvent is preferably higher than that of the solvent, preferably about 20°C higher. For example the solvent might be dimethyl formamide or dimethyl acetamide, in which case a suitable non-solvent is 1-octanol which is soluble in those solvents and whose boiling point is about 194°C. Alternative non-solvents would be 1-heptanol, for which the boiling point is about 175°C; 2-octanol, for which the boiling point is about 179°C; 4-octanol, for which the boiling point is about 175°C; or 3-nonanol, for which the boiling point is about 193°C.

The evaporation rate during drying must not be rapid, as rapid drying tends to increase the rate of precipitation of the polymer and hence give rise to macropores, and also may lead to formation of an impervious skin which prevents evaporation of underlying liquid. When using a latent solvent, the drying process should be carried out at a temperature below the dissolution temperature for the latent solvent. Consequently the polymer precipitates, and it is believed that two phases occur: a polymer-rich phase, and a polymer-poor phase. As the latent solvent evaporates the proportion of the polymer-rich phase gradually increases, but the remaining droplets of polymer-poor phase cause the formation of pores.

The invention will now be further described, by way of example only, and with reference to the following Examples, and with reference to the accompanying drawings in which:
Figure 1 shows an electron microscope image of a membrane of the invention;
Figure 2 shows an electron microscope image of a membrane of a comparative example.

### Example 1

Homopolymer PVdF (Solvay grade 1015), which is characterized by having a low value of melt flow index (about 0.7 g/10 min at 10 kg and 230°C), is dissolved in dimethyl formamide (DMF) at a temperature of 45°C while stirring; 15 g of PVdF were dissolved in 85 g of DMF. A small quantity, 9 g, of 1-octanol is then added dropwise to the polymer solution, and carefully mixed during this addition to ensure the mixture is homogeneous. The quantity of 1-octanol must not be too large, or the solution will gel. The resulting ternary mixture is then cast, using a doctor blade over a roller, onto an aluminium foil substrate to form a layer initially 0.25 mm thick, and then passed through a 7 m long drying tunnel with two successive drying zones at temperatures of 65°C and 100°C respectively. It moves through the drying tunnel at 0.5 m/min. Within the drying zones the film is exposed to a dry air flow with a velocity of 14 m/s, to remove any solvent and non-solvent that evaporates.

The dry air is obtained by passing air through a dehumidifier, so its dew point is -40°C.

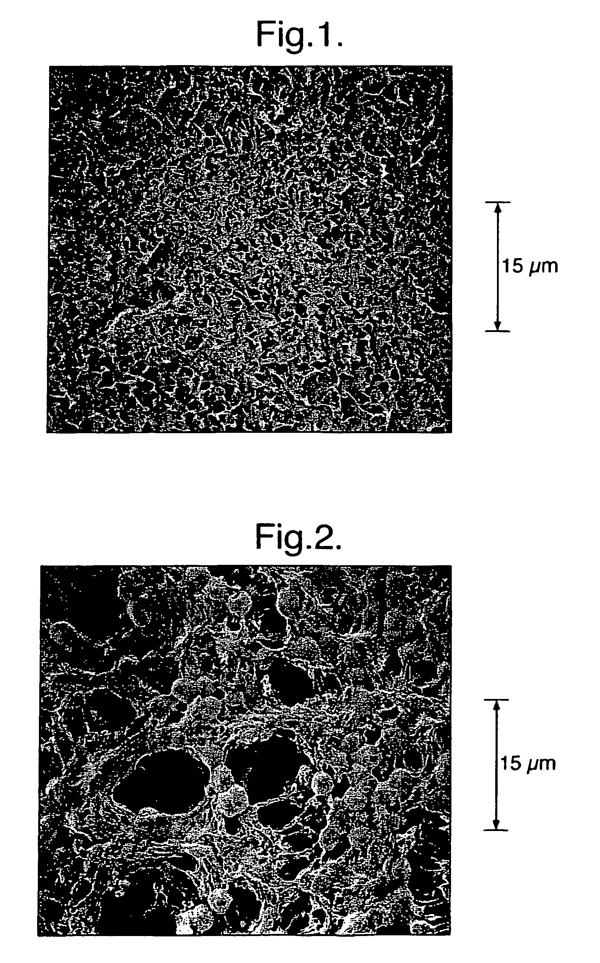

During passage of the film through the drying tunnel, which takes 14 minutes, both the solvent and non-solvent gradually evaporate (although they are both well below their boiling points), the solvent tending to evaporate more rapidly. A white polymer membrane is thereby obtained, of thickness about 40 µm. As discussed later in relation to Figure 1, analysis with a scanning electron microscope shows it to be microporous. The pores are of size in the range 0.5-2.0 µm, typically about 1 µm in diameter, at least at the surface. Measurement of the pore size by Coulter porometry indicates that the pores are of size 0.06 µm to 0.1 µm.

The microporous membrane has been found to have a porosity of 52.96%. The tensile strength of this microporous membrane has been measured using specimens 20 mm wide, pulled to tensile failure at a rate of 10 cm/min between clamping heads in a tensile test rig. The value of maximum tensile stress was found to be 1.18 MPa (with a standard deviation of 0.08 MPa). The matrix strength, calculated by dividing this value by (1 - porosity), is thus 2.5 MPa.

### Example 2

Homopolymer PVdF grade 1015 is dissolved in the latent solvent propylene carbonate, 12 grams of polymer being dissolved in 88 grams of propylene carbonate at about 85°C, while stirring. The polymer solution is cast onto an aluminium foil, as described in Example 1, both the first and second drying zones in this case being at 50°C so as to ensure that the polymer precipitates, and the web speed is 1 m/min. The aluminium foil and the polymer film are then passed through a second such tunnel dryer, at a web speed of 0.5 m/min, and with drying zone temperatures of 65°C and 80°C in the first and second drying zones. This ensures that all the propylene carbonate evaporates from the film. As with Example 1, within the drying zones the film is exposed to a dry air flow with a velocity of 14 m/s, the dry air having a dew point of -40°C.

As with the previous example, a white polymer membrane is thereby obtained, of thickness about 30 µm, and analysis with a scanning electron microscope shows it to be microporous.

It will be appreciated that the structure, morphology and porosity of the polymer membrane made by the process of the invention depend upon several different parameters such as: concentration of polymer, the molecular weight and chemical composition of the polymer, the amount and nature of the solvent and non-solvent or latent solvent, the web speed and drying temperature, and the air flow during drying. A significant advantage of this method is its simplicity, and the avoidance of the need to use a separate liquid bath.

### Comparative Example 1

A particularly significant consideration is the dryness of the air to which the film is exposed. As a comparative example, the procedure of Example 1 was repeated except that the air flow in the drying zones was ambient air rather than air that had been passed through a dehumidifier. The air was not particularly humid: it had a dewpoint of 6°C. As with the other examples, a white polymer membrane was thereby obtained, of thickness about 30 µm. Referring now to the figures, these are scanning electron microscope images showing the membrane produced in Example 1, in figure 1, and the membrane produced in the Comparative Example, in figure 2. Both photographs are obtained under the same conditions, and both are at a magnification of x 2000. The images show clearly that although both membranes are microporous, the pores in the membrane of Example 1 are much smaller and of more uniform size, typically about 1 µm or less, whereas the pores in the membrane of the Comparative Example are far less uniform, and in some cases much bigger for example about 5 or 6 µm. It is evident that the use of very low humidity air is essential if good quality membranes are to be produced.

### Example 3

Another significant consideration is the homogeneity of the mixed solution before it is cast. In the procedure of Example 1, homogeneity was ensured by adding the 1-octanol dropwise over a prolonged period, and subsequently mixing for a prolonged period. The problem of achieving homogeneity is partly due to the very high viscosity of the mixture. For example a 15% by weight solution of homopolymer PVdF, as in Example 1, was made by dissolving 150 g homopolymer PVdF in 850 g dimethyl formamide (DMF) using a rotating PTFE disk mixer set to a speed of 1500 rpm for 6 hours. The polymer solution was then allowed to solvate while standing for 24 hours. The resulting solution had a viscosity of 2512 mPa s (about 2500 times greater than water).

To 200 g of the above solution, 30 g of octanol was added dropwise, and the mixture was mixed for 4 hours using the rotating PTFE disk mixer as above, the disk being a flat disk of diameter 60 mm and the container being of diameter 90 mm (for effective mixing with such a flat disk, the container should be of diameter between 1.3 and 3 times the disk; such a disk mixer minimizes any scission of the polymer chains). The mixture was then coated as described in relation to Example 1. The resulting membrane was substantially identical to that of Example 1, in particular as regards porosity.

### Comparative Example 2

The procedure of Example 3 was repeated, except that after the addition of the octanol it was mixed for only 2 hours, the mixture then being coated as described in relation to Example 1. The resulting membrane when viewed by scanning electron microscope had no visible pores; the pores were of size less than 0.1 microns at the surface. It is clear that achieving homogeneity of the mixture is an essential consideration when forming porous membranes.

Polymer membranes made as in Example 1, Example 2, or Example 3 can be plasticised by immersing them in an organic electrolyte; a solid electrolyte (or "gelled electrolyte") is thereby formed, and this solid electrolyte may be used in a lithium ion polymer cell. Test cells have been assembled with a polymer membrane made as in Example 1, 2 or 3 sandwiched between a cathode and an anode. The cathode consisted of LiCoO₂ and carbon, with a binder of PVdF homopolymer, coated onto an aluminium foil current collector. The anode consisted of mesocarbon microbeads (particle size 10 µm, heat treated at 2800°C) and graphite, with a PVdF homopolymer binder, coated onto a copper foil current collector. These cell components were wound into a spiral, and then vacuum filled with a plasticising liquid electrolyte: 1 molar LiPF₆ in ethylene carbonate/ethyl methyl carbonate mixture. Each cell was then stored for 16 hours to ensure the electrolyte had been absorbed by all the cell components, and was then vacuum packed in a flexible packaging material.

Each cell was then subjected to repeated charge and discharge cycles. The cells were found to cycle efficiently and to have good capacity. The cell was first discharged at an estimate of the C/5 rate, and the observed capacity during that discharge enabled a more accurate measure of cell capacity C to be obtained. The cell was able to be cycled over 100 times at the C/5 rate with only slight decrease in capacity. The cell was also discharged more rapidly, and even at a discharge rate of 2C was found to provide 90% of the rated capacity C.

### Example 4

Microporous polymer membranes can also be made, for example using the solvent and non-solvent procedure, with a polymer in which the polymeric chain consists primarily of vinylidene fluoride, onto which is grafted a mono-unsaturated carboxylic, sulphonic or phosphonic acid, ester, or amide. The monomer to be grafted onto the polymer chain should have only one double-bond in the carbon chain R-, and one or more carboxyl groups -COOH, sulphonic acid groups -SO₂OH, phosphonic acid groups - PO(OH)₂, ester groups -COOR', or amide groups -CONH₂. Generally smaller monomers, with less than five carbon atoms in the carbon chain R-, are preferable. For example acrylic acid; crotonic acid, vinylacetic acid, methylacrylic acid (which are isomers of butenoic acid); isomers of pentenoic acid such as allylacetic acid; etc. The corresponding amides (and substituted amides) may also be used. In an ester, the group R' might be methyl, ethyl or butyl; for example esters such as methyl acrylate or butyl acrylate may be used. Some preferred monomers for grafting are acrylic acid or dimethyl acrylamide, but a range of other monomers that incorporate the vinyl group are also suitable.

The grafting can be achieved by an irradiation process. For example the polymer chain substrate and the graft monomer material together may be subjected to continuous or intermittent irradiation; or more preferably the substrate is pre-irradiated before being brought into contact with the monomer material. The irradiation may be with an electron beam, or X-rays. The irradiation activates the substrate (the polymer chain) apparently by generating free radicals. The degree of grafting is determined by several factors, the most important being the extent of pre-activation of the polymer substrate by the irradiation, the length of time that the activated polymer is in contact with the graft monomer material, the extent to which the monomer can penetrate the polymer, and the temperature of the polymer and the monomer when in contact. The degree of grafting in the resulting material is desirably between 2 and 20% of the final weight, more preferably between 3 and 12%, for example 5% or 10%.

A porous polymer membrane may be made using the solvent and non-solvent procedure, with a polymer such as a PVdF homopolymer onto which acrylic acid has been grafted to make up 10% of the weight of the polymer. Such a membrane may then be soaked in a non-aqueous liquid electrolyte so as to form a solid electrolyte (or gelled electrolyte), as described previously, and the grafting is found to improve the uptake of electrolyte by the polymer membrane. Furthermore, when such a layer of solid electrolyte is used in an electric cell the adhesion properties of the electrolyte are found to be improved.

### Example 5

Microporous polymer membranes can also be made using a mixture of different polymers. For example a 15% by weight solution of homopolymer PVdF, as in Example 1, is made by dissolving 150 g homopolymer PVdF in 850 g dimethyl formamide (DMF). Similarly, a 12% by weight solution of a copolymer PVdF/6HFP (vinylidene fluoride and 6% by weight hexafluoropropylene) is made by dissolving 120 g of the copolymer in 880 g DMF. A mixture was then made of 25 g of the copolymer solution and 200 g of the homopolymer solution, to which 21 g octanol was added dropwise, and kept stirred for 4 hours to ensure uniformity. The resulting mixture was then cast using the same casting and drying procedures as described in Example 1.

The resulting membrane was microporous, and has good mechanical strength. The tensile strength was measured as described in relation to example 1. The value of maximum tensile stress was found to be 0.76 MPa (with a standard deviation of 0.03 MPa).

Test cells have been assembled using the mixed polymer membrane of Example 5 sandwiched between a cathode and an anode. The anode and cathode were made as described above, but in this case the active cathode material was LiMn₂O₄; as before, the active anode material consisted of mesocarbon microbeads. These components were wound into a spiral, and then vacuum filled with a plasticising liquid electrolyte: LiPF₆ in ethylene carbonate/methyl propyl carbonate mixture. The cell was found to have a capacity of 638 mAh; and at a discharge rate of 2C was found to provide 94% of its rated capacity.

## Claims

1. A method of making a porous polymer membrane in which a polymer consisting primarily of vinylidene fluoride is dissolved in a suitable liquid, the solution is cast to form a thin layer less than 0.5 mm thick on a substrate, and the liquid phase is then slowly evaporated while being exposed to a dry gas without contacting the layer with any other liquids so that a substantially uniform microporous membrane of polymer is formed.

2. A method as claimed in claim 1 in which the liquid comprises a solvent for the polymer, combined with a small proportion of a non-solvent which dissolves in the solvent.

3. A method as claimed in claim 1 in which the liquid comprises a latent solvent.

4. A method as claimed in any one of the preceding claims in which the dry gas has a dew point less than -10°C.

5. A method as claimed in claim 4 wherein the dry gas has a dew point less than -20°C.

6. A method as claimed in claim 3 in which the evaporation process is performed at a temperature below the dissolution temperature for the polymer in the latent solvent.

7. A method as claimed in claim 2 in which the boiling point of the non-solvent is higher than that of the solvent.

8. A method as claimed in claim 6 in which the boiling point of the non-solvent is about 20°C higher than that of the solvent.

9. A method as claimed in any one of the preceding claims in which the solution contains a plurality of different polymers, each polymer consisting primarily of vinylidene fluoride.

10. A method of making a porous polymer membrane substantially as hereinbefore described.

11. A porous polymer membrane made by a method as claimed in any one of the preceding claims.

12. An electrochemical cell incorporating a polymer membrane as claimed in claim 11.

## Patentansprüche

1. Verfahren zur Herstellung einer porösen Polymermembran, worin ein hauptsächlich aus Vinylidenfluorid bestehendes Polymer in einer geeigneten Flüssigkeit gelöst wird, die Lösung zur Ausbildung einer dünnen Schicht von weniger als 0,5 mm Dicke auf ein Substrat gegossen wird und die flüssige Phase anschließend langsam während Exposition an ein trockenes Gas ohne in-Kontakt-Bringen der Schicht mit irgendwelchen anderen Flüssigkeiten verdampft wird, so dass eine im Wesentlichen gleichmäßig mikroporöse Membran aus Polymer ausgebildet wird.

2. Verfahren, wie in Anspruch 1 beansprucht, worin die Flüssigkeit ein Lösungsmittel für das Polymer umfasst, kombiniert mit einem kleinen Anteil eines Nicht-Lösungsmittels, das sich im Lösungsmittel löst.

3. Verfahren, wie in Anspruch 1 beansprucht, worin die Flüssigkeit ein latentes Lösungsmittel umfasst.

4. Verfahren, wie in einem der vorstehenden Ansprüche beansprucht, worin das trockene Gas einen Taupunkt unterhalb von -10 °C aufweist.

5. Verfahren, wie in Anspruch 4 beansprucht, worin das trockene Gas einen Taupunkt unterhalb von -20°C aufweist.

6. Verfahren, wie in Anspruch 3 beansprucht, worin der Verdampfungsprozess bei einer Temperatur unterhalb der Lösungstemperatur für das Polymer im latenten Lösungsmittel durchgeführt wird.

7. Verfahren, wie in Anspruch 2 beansprucht, worin der Siedepunkt des Nicht-Lösungsmittels höher als derjenige des Lösungsmittels ist.

8. Verfahren, wie in Anspruch 6 beansprucht, worin der Siedepunkt des Nicht-Lösungsmittels etwa 20 °C höher als derjenige des Lösungsmittels ist.

9. Verfahren, wie in einem der vorstehenden Ansprüche beansprucht, worin die Lösung eine Vielzahl von verschiedenen Polymeren enthält, wobei jedes Polymer hauptsächlich aus Vinylidenfluorid besteht.

10. Verfahren zur Herstellung einer porösen Polymermembran, im Wesentlichen wie hierin zuvor beschrieben.

11. Poröse Polymermembran, hergestellt über ein Verfahren, wie in einem der vorstehenden Ansprüche beansprucht.

12. Elektrochemische Zelle, enthaltend eine Poylmermembran, wie in Anspruch 11 beansprucht.

## Revendications

1. Procédé de fabrication d'une membrane polymère poreuse dans laquelle un polymère constitué principalement de fluorure de vinylidène est dissous dans un liquide approprié, la solution est moulée afin de former une couche fine inférieure à 0,5 mm d'épaisseur sur un support, et la phase liquide est ensuite lentement évaporée tandis qu'elle est exposée à un gaz sec sans mettre en contact la couche avec un quelconque autre liquide de sorte qu'une membrane microporeuse essentiellement uniforme du polymère soit formée.

2. Procédé selon la revendication 1, dans lequel le liquide comprend un solvant pour le polymère, combiné avec une petite proportion d'un non-solvant qui se dissous dans le solvant.

3. Procédé selon la revendication 1, dans lequel le liquide comprend un cosolvant.

4. Procédé selon l'une quelconque des revendications précédentes, dans lequel le gaz sec possède un point de rosée inférieur à -10°C.

5. Procédé selon la revendication 4, dans lequel le gaz sec possède un point de rosée inférieur à -20°C.

6. Procédé selon la revendication 3, dans lequel le processus d'évaporation est effectué à une température en dessous de la température de dissolution du polymère dans le cosolvant.

7. Procédé selon la revendication 2, dans lequel le point d'ébullition du non-solvant est supérieur à celui du solvant.

8. Procédé selon la revendication 6, dans lequel le point d'ébullition du non-solvant est supérieur d'environ 20°C à celui du solvant.

9. Procédé selon l'une quelconque des revendications précédentes, dans lequel la solution contient une pluralité de polymères différents, chaque polymère se composant principalement de fluorure de vinylidène.

10. Procédé de fabrication d'une membrane polymère poreuse essentiellement tel que décrit précédemment.

11. Membrane polymère poreuse fabriquée par un procédé selon l'une quelconque des revendications précédentes.

12. Cellule électrochimique incorporant une membrane polymère selon la revendication 11.
